# EUROPEAN PATENT APPLICATION

(11) **EP 4 791 085 A1**
(43) Date of publication of application: **12.08.2026**
(21) Application number: 24882786.7
(22) Date of filing: 23.10.2024
(51) Int. Cl.: H04W 40/22, H04W 8/00, H04W 76/14, H04W 84/18, H04W 88/04, H04W 92/18

(54) **METHOD AND DEVICE FOR SEARCHING FOR DATA PATH IN WIRELESS COMMUNICATION SYSTEM**

(30) Priority: 27.10.2023 KR 20230145420
(71) Applicant: Samsung Electronics Co., Ltd., Suwon-si, Gyeonggi-do 16677 (KR)
(72) Inventor: KWEON, Kisuk, Suwon-si Gyeonggi-do 16677 (KR)
(74) Representative: Nederlandsch Octrooibureau
(86) International application number: PCT/KR2024/016113
(87) International publication number: WO 2025/089759

(57) **Abstract**

The present disclosure provides a method performed by a first relay terminal in a wireless communication system including a first terminal, a second terminal, the first relay terminal, and a second relay terminal supporting a proximity based service (ProSe). The method comprises the steps of: receiving a first message for discovery for the second terminal from the first terminal; and transmitting a second message to the second relay terminal on the basis of the first message, wherein the first message includes first information for a relay service and second information for a multi-hop relay.

## Description

### [Technical Field]

The disclosure relates to a wireless communication system. More specifically, the disclosure relates to a method and a device for discovering a reliable data path in an environment that supports a multi-hop relay in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure is to provide an apparatus and a method capable of effectively providing services in a wireless communication system.

An aspect of the disclosure is to provide a method and an apparatus for effectively supporting proximity based services (ProSe) in a multi-hop environment.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

According to an embodiment of the disclosure, a method for processing a control signal in a wireless communication system may include receiving a first control signal transmitted from a base station, processing the received first control signal, and transmitting a second control signal, generated based on the processing, to the base station.

### [Advantageous Effects of Invention]

Provided according to embodiments proposed in the disclosure are an apparatus and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates an architecture of a 5G network according to an embodiment of the disclosure.
FIG. 2 illustrates a 5G proximity based services (ProSe) UE-to-network relay structure supporting multiple hops according to an embodiment of the disclosure.
FIG. 3 illustrates a 5G proximity based services (ProSe) UE-to-network relay structure supporting multiple hops according to an embodiment of the disclosure.
FIG. 4 illustrates an example of a communication disconnection situation that may occur in ProSe communication supporting multiple hops according to an embodiment of the disclosure.
FIG. 5 illustrates a procedure in which a 5G ProSe-enabled UE performs data path discovery in order to transmit data according to an embodiment of the disclosure.
FIG. 6 illustrates a scenario in which the same data is redundantly transmitted through multiple data transmission paths according to an embodiment of the disclosure.
FIG. 7 illustrates data transmission according to a flooding scheme in which data is directly transmitted without performing data path discovery according to an embodiment of the disclosure.
FIG. 8 illustrates a structure of a UE according to an embodiment of the disclosure.
FIG. 9 illustrates a structure of a base station or network entity according to embodiments of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) standards may be used for the sake of descriptive convenience. However, the disclosure is not limited by these terms and names, and may be applied in the same way to systems that conform other standards.

Provided according to embodiments proposed in the disclosure are a method and an apparatus for transmitting a control signal by using a user plane in order to use services provided by a user plane function (UPF).

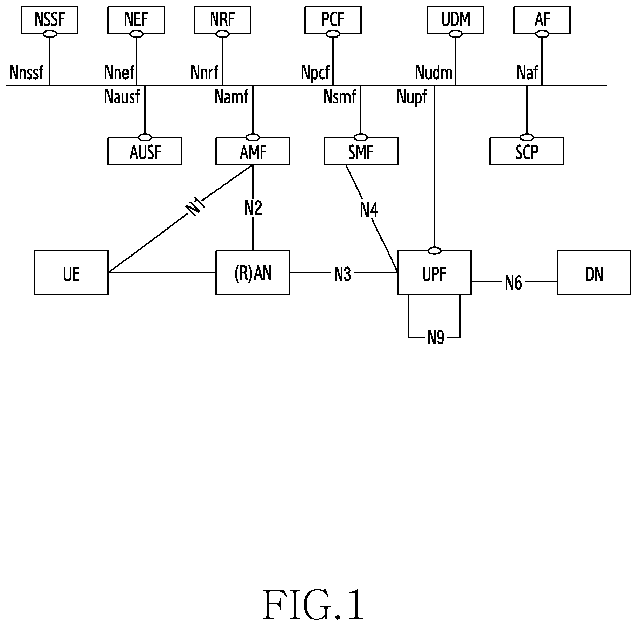

FIG. 1 illustrates an architecture of a 5G network according to an embodiment of the disclosure.

Referring to FIG. 1, network entities or network nodes constituting the 5G network are described as follows.

A (radio) access network ((R)AN) is an entity that performs radio resource allocation to a UE, and may be at least one of an eNode B, a Node B, a base station (BS), a next generation radio access network (NG-RAN), a 5G-AN, a wireless access unit, a base station controller, or a node on the network.

A terminal may include a user equipment (UE), a next generation UE (NG UE), a mobile station (MS), a cellular phone, a smartphone, a computer, or a multimedia system capable of performing a communication function. Also, in the following description, embodiments of the disclosure will be described using a 5G system as an example, but the embodiments of the disclosure may also be applied to other communication systems having similar technical backgrounds. Moreover, based on determinations by those skilled in the art, the embodiments of the disclosure may also be applied to other communication systems through some modifications without significantly departing from the scope of the disclosure.

As wireless communication systems evolve from 4G systems into 5G systems, a new core network (CN) referred to as a next generation core (NG core) or a 5G core network (5GC) has been defined. The new core network has fully virtualized the existing network entities (NEs) into network functions (NFs). According to an embodiment of the disclosure, a network function (NF) may refer to a network entity, a network component, and a network resource.

According to an embodiment of the disclosure, the 5GC may include NFs illustrated in FIG. 1. It is obvious that the disclosure is not limited to the example of FIG. 1 and the 5GC may include a larger or smaller number of NFs than the NFs illustrated in FIG. 1.

An access and mobility management function (AMF) may be a network function that manages access and mobility of a UE. For example, the AMF may perform network functions, such as registration, connection, reachability, mobility management, access verification, authentication, and mobility event generation.

A session management function (SMF) may be a network function that manages packet data network (PDN) connection provided to a user equipment (UE). The PDN connection may be referred to as a protocol data unit (PDU) session. For example, the SMF may perform network functions, such as a session management function including session establishment, modification, and release, and tunnel maintenance between a user plane function (UPF) and the RAN required therefor, user plane (UP) selection and control, traffic processing control at the UPF, and charging data collection control.

A policy control function (PCF) may be a network function that applies a service policy, a charging policy, and a PDU session policy of a mobile communication service provider to a UE.

A unified data management (UDM) may be a network function that stores information about a subscriber. For example, the UDM may perform functions, such as generation of authentication information for 3GPP security, processing of a user identifier (user ID), management of a list of network functions supporting a UE, and management of subscription information.

A network exposure function (NEF) may be a function that provides information about a UE to a server located outside the 5G network. In addition, the NEF may provide a function that provides information required for a service to the 5G network and stores same in a UDR.

A user plane function (UPF) may be a function that serves as a gateway for delivering user data (PDU) to a data network (DN). More specifically, the UPF may serve to process data so as to deliver data transmitted by a UE to an external network or deliver incoming data from an external network to a UE. As an example, the UPF may perform network functions, such as serving as an anchor between radio access technologies (RAT), packet routing and forwarding, packet inspection, user plane policy application, traffic usage report creation, and buffering.

A network repository function (NRF) may perform an NF discovery function.

An authentication server function (AUSF) may perform UE authentication in a 3GPP access network and a non-3GPP access network.

A network slice selection function (NSSF) may perform selection of a network slice instance provided to a UE.

A data network (DN) may be a data network over which a UE transmits or receives data to use a service of a network service provider or a 3rd party service.

In addition, the terms used in the disclosure may be defined as follows.

The term "ProSe service or proximity based service (ProSe)" (proximity service) may refer to a service capable of discovery between devices physically proximate to each other, direct communication between devices, communication via a base station, or communication via a third device. With regard to this, user plane data may be exchanged via a direct data path without passing through a core network.

A ProSe-enabled UE may refer to a UE that supports ProSe discovery and/or ProSe communication.

A ProSe UE-to-network relay may refer to a type of relay that is a ProSe-enabled UE and operates as a communication relay between a ProSe-enabled UE and a network.

A ProSe UE-to-UE relay (proximity service UE-to-UE relay) may refer to a type of relay that is a ProSe-enabled UE and operates as a proximity service communication relay between ProSe-enabled UEs.

ProSe discovery may refer to a process in which a ProSe-enabled UE identifies whether another ProSe-enabled UE or a ProSe relay providing a proximity service exists.

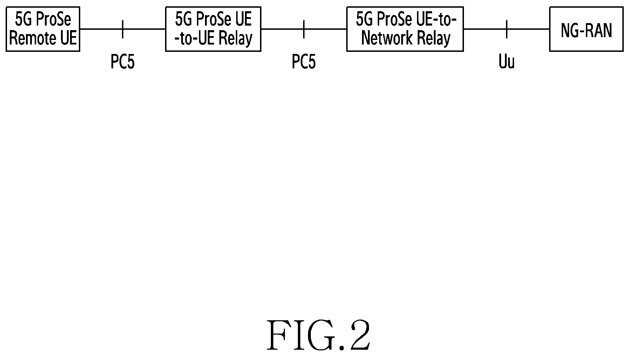

FIG. 2 illustrates a 5G proximity-based services (ProSe) UE-to-network relay structure supporting multiple hops according to an embodiment of the disclosure.

Referring to FIG. 2, a 5G ProSe remote UE, a 5G ProSe UE-to-UE relay, and a 5G ProSe UE-to-Network relay may be 5G ProSe-enabled UEs. In addition, the 5G ProSe remote UE may communicate with the NG-RAN (or network) in a multiple-hop environment by using the 5G ProSe UE-to-UE relay and the 5G ProSe UE-to-network relay. The 5G ProSe UE-to-UE relay and the 5G ProSe UE-to-network relay may provide a data relay service to allow the 5G ProSe remote UE to communicate with the network in a multiple-hop environment. In addition, 5G ProSe-enabled UEs (e.g., at least one of a 5G ProSe remote UE, a 5G ProSe UE-to-UE relay, or a 5G ProSe UE-to-network relay) may use a PC5 interface to transmit data and signaling. A 5G ProSe-enabled UE and an NG-RAN (or network) may use a Uu interface for user data transmission. Hereinafter, the term "UE" or "relay" in embodiments of the disclosure may refer to a 5G ProSe-enabled UE. In addition, the 5G ProSe enabled UE may refer to at least one of a 5G ProSe remote UE, a 5G ProSe UE-to-UE relay, and a 5G ProSe UE-to-network relay. Of course, the above example is not limiting, and another device for performing 5G ProSe communication, which is not included in the above example, may also be included.

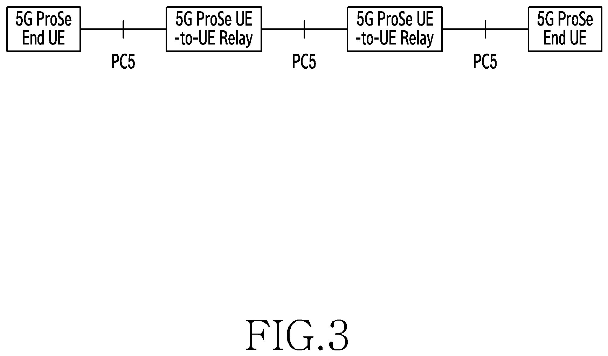

FIG. 3 illustrates a 5G ProSe UE-to-UE relay structure supporting multiple hops according to an embodiment of the disclosure.

Referring to FIG. 3, a 5G ProSe End UE and a 5G ProSe UE-to-UE relay are 5G ProSe-enabled UEs, and the 5G ProSe End UE may communicate with a counterpart 5G ProSe End UE by using the 5G ProSe UE-to-UE relay. The 5G ProSe UE-to-UE relay may provide a data relay service so that 5G ProSe End UEs are capable of performing communication. In addition, 5G ProSe-enabled UEs (e.g., 5G ProSe End UE and 5G ProSe UE-to-UE relay) may use a PC5 interface to transmit data and signaling.

FIG. 3 illustrates a structure in which at least one 5G ProSe UE-to-UE relay supports multiple hops that can be used for data transmission.

In the disclosure, a scheme for supporting reliable communication for a 5G ProSe-enabled UE that performs communication by using a 5G ProSe UE-to-UE relay or a 5G ProSe UE-to-network relay in ProSe communication supporting a multiple-hop environment may be proposed.

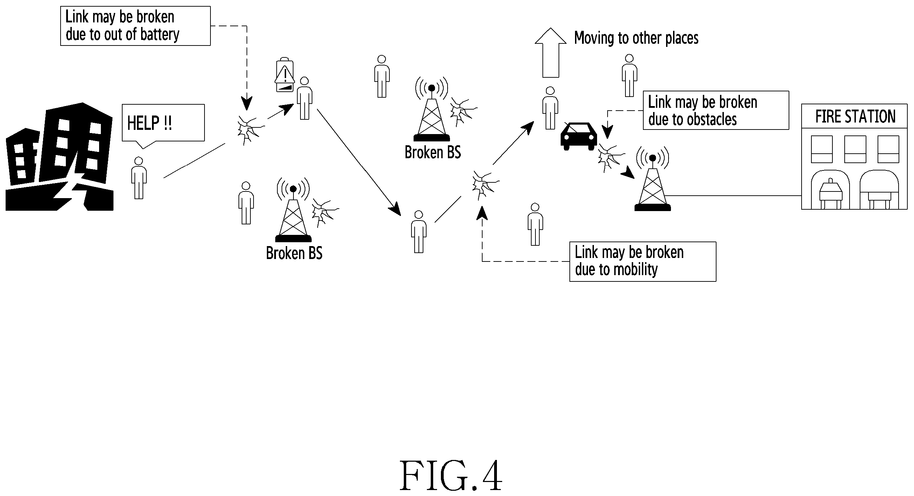

FIG. 4 illustrates an example of a communication disconnection situation that may occur in ProSe communication supporting multiple hops according to an embodiment of the disclosure.

Referring to FIG. 4, communication may be impossible when communication infrastructure is destroyed due to disasters such as earthquakes and fires. In this case, a scheme for enabling communication by using a user terminal without relying on a destroyed infrastructure (e.g., a base station) may be ProSe. Since a UE operates on battery power, a communication transmission distance of the UE may be significantly shorter than that of a base station. Therefore, in order to communicate with a UE located at a distant position, a UE may perform communication by relaying data through one or more nearby UEs. Communication performed by relaying data through nearby UEs to reach a remote UE may be referred to as communication using multiple hops. However, since communication is performed across multiple terminals, it may be difficult to perform reliable communication due to issues in communication links between respective hops. As shown in FIG. 4, a UE may exhaust its battery, causing the UE to power off and resulting in a disconnection of communication. In addition, the distance between the two UEs may be longer than the transmission distance of the UE, or communication may be disconnected due to an obstacle such as a car or a building. Therefore, a scheme for reliably performing ProSe communication based on multiple hops may be proposed in the disclosure.

The disclosure may be applied to a communication method (e.g., ProSe communication) using a 5G ProSe UE-to-UE relay or a 5G ProSe UE-to-network relay, and may be applied to model A and model B methods, which are relay discovery methods. Model A may refer to a discovery procedure in which a relay transmits an announcement message, and model B may refer to a discovery procedure in which an end UE or a remote UE transmits a solicitation message.

The disclosure may support multiple transmission paths for reliable communication. For example, a UE may perform multiple path discovery procedures according to a service requirement when performing data path discovery, and may store and/or maintain the discovered multiple paths to use another path when a currently used path is interrupted.

The disclosure may support multiple data transmissions for reliable communication. For example, a UE may transmit the same data multiple times when transmitting data, according to a service requirement.

The disclosure may support flooding, which refers to direct transmission of data without configuring a data transmission path. In a flooding scheme, a procedure of performing data transmission path discovery may be omitted and data may be transmitted to all UEs depending on a service requirement. However, the flooding scheme may cause network congestion or a large amount of traffic, and may result in significant battery consumption of UEs. Accordingly, data transmission using the flooding scheme may be very strictly restricted and may be used only in highly urgent situations (e.g., earthquake, tsunami, large-scale fires, and the like).

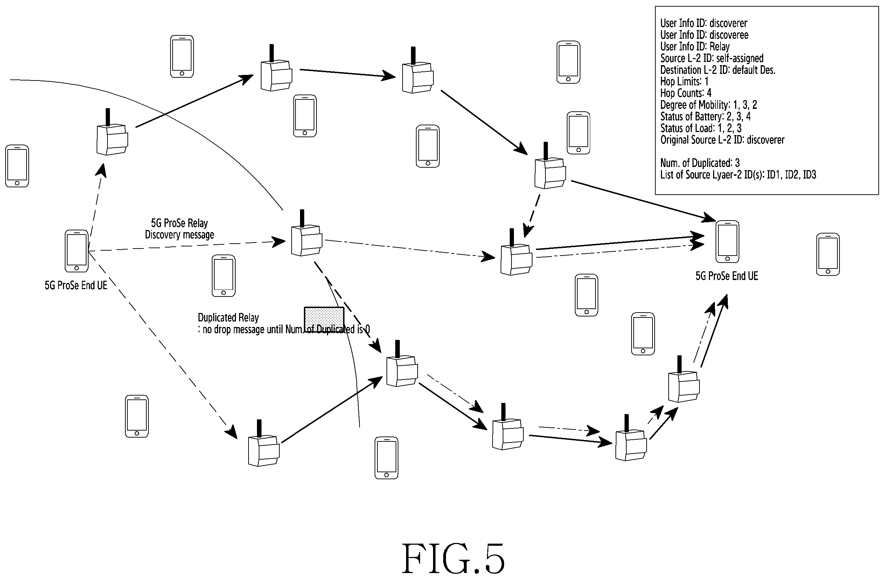

FIG. 5 illustrates a procedure in which a 5G ProSe enabled UE performs data path discovery in order to transmit data according to an embodiment of the disclosure.

Referring to FIG. 5, the embodiment may be described based on a scenario in which a 5G ProSe UE-to-UE relay is discovered using Model B.

A 5G ProSe End UE that initiates 5G ProSe UE-to-UE relay discovery may be referred to as a discoverer 5G ProSe End UE. A counterpart UE of the discoverer may be referred to as a discoveree 5G ProSe End UE. A 5G ProSe UE-to-UE relay discovery solicitation message in a multiple-hop environment may include not only existing parameters but also additional parameters.

The existing parameter may be referred to as a 5G ProSe UE-to-UE relay discovery parameter group. A new parameter added for multi-hop may be referred to as a Multiple PC5 hops parameter group. Of course, the above names are only an example, and other names may be used. In addition, the existing parameter and the additional parameter may not be distinguished.

The existing parameter may include at least one of a type of discovery message, a relay service code (RSC), a user info ID (discoverer), a user info ID (discoveree), a source layer-2 ID, or a destination layer-2 ID.

The additional parameters may include at least one of User Info ID (Relay), Hop Limits, Hop Counts, Degree of Mobility, Status of Battery, Status of Load, original source layer-2 ID, and Num. of Duplicated, or a list of source layer-2 IDs.

A value of Hop Limits may limit the number of hops through which a relayed message can be transmitted. Hop limits may prevent a message from being relayed across the entire network, thereby preventing network congestion. In addition, since an appropriate distance to a discoveree 5G ProSe End UE may vary depending on each RSC (e.g., service), the value of Hop Limits may be adjusted to discover an appropriate discoveree 5G ProSe End UE. Although the value of Hop Limits may be determined according to a ProSe application server and a network policy, it may also be manually determined by an authorized person according to a field situation (e.g., a disaster situation). In addition, a value of Hop Limits manually determined by an authorized person may have priority over a value determined by a ProSe application server and a network policy. Different values of Hop Limits may be assigned according to the RSC and the field situation. For example, in a case of a service used in a minor disaster situation such as a traffic accident, a relatively small value of Hop Limits may be assigned, and in a case of a disaster situation occurring over a wide area, such as an earthquake, a relatively large value of Hop Limits may be assigned. In addition, when a disaster area is a narrow area such as an island having a low UE density, a relatively small value of Hop Limits may be assigned, and when the disaster area is a wide area such as a large city having a high UE density, a larger value of Hop Limits may be assigned. In addition, in order to avoid network congestion, the discoverer 5G ProSe End UE may transmit an initial 5G ProSe UE-to-UE relay discovery solicitation message using a value equal to or greater than a minimum value of Hop Limits. Alternatively, when the discoverer 5G ProSe End UE does not receive a 5G ProSe UE-to-UE relay discovery response message within a specified time period (timer), the discoverer 5G ProSe End UE may reconfigure the value of Hop Limits to a value between the minimum value and the maximum value, or to the maximum value, according to the RSC and a disaster-site condition, and may retransmit the message. Furthermore, depending on field conditions (e.g., a type of disaster, a size of a region, urgency, etc.), the value of Hop Limits may be manually configured by an authorized person to a value greater than the maximum value, and the message may be retransmitted. Of course, the disclosure is not limited to the above examples, and the value of Hop Limits may be determined in consideration of multiple conditions.

Hop counts represent a value that increases each time a hop is traversed, and may indicate a number of hops through which a solicitation message has passed before reaching a discoveree 5G ProSe End UE. The value of Hop Counts may serve as a basis for selecting a message received through a particular path when the discoveree 5G ProSe End UE later receives solicitation messages transmitted through multiple paths later.

The values of Degree of Mobility, Status of Battery, and Status of Load are values that are input only by a 5G ProSe UE-to-UE relay, and may be used to maintain a stable overall path when configuring a relay path between a discoverer 5G ProSe End UE and a discoveree 5G ProSe End UE. Degree of Mobility may be a value indicating the Degree of Mobility (for example, the extent to which the relay has mobility) of the relay. Status of battery may indicate an available battery capacity of the relay. The relay is also a mobile device and may be operated by a battery. Status of Load may indicate the load of the relay connectivity service that the relay is processing. Since each relay has a different location and a different type and number of connectivity services that may be supported, the load processed by each relay may differ. The information described above (e.g., Degree of Mobility, Status of Battery, and Status of Load) may be used as basis information for determining selection of a message received through one of multiple transmission paths when the discoveree 5G ProSe End UE later receives solicitation messages transmitted through multiple paths. For example, in a case of a path configured by a relay having high mobility, frequent relay reselection may occur due to movement of the relay. In addition, in a case of a path configured by a relay having a small battery capacity, the relay may be turned off, and a relay reselection may be necessary. Of course, the above example is not limiting, and other parameters may be added to or substituted for the parameters for the above-described determination.

The value of original source layer-2 ID may be used to prevent relays from redundantly relaying a solicitation message transmitted by the same discoverer. The value of original source layer-2 ID may be assigned, by a relay that first receives the solicitation message from the discoverer, to the source layer-2 ID of the discoverer (e.g., the source layer-2 ID value of the discoverer) in the 5G ProSe UE-to-UE relay discovery parameter group. Subsequent relays may perform the relay without modifying the value of original source layer-2 ID.

The value of Num. of Duplicated may be configured to enable discovery of multiple paths during data path discovery. In order to prevent network congestion caused by retransmission of a previously transmitted solicitation message, a UE may use the value of original source layer-2 ID. When the value of Num. of Duplicated is configured, even if a UE has previously transmitted a solicitation message, the UE may retransmit the solicitation message after decreasing the value of Num. of Duplicated by 1 and resetting the value, provided that the value of Num. of Duplicated is not "0." When the value of Num. of Duplicated is "0," the UE may refrain from retransmitting the solicitation message.

The list of source layer-2 IDs may be a list of layer-2 IDs of relays that have transmitted a solicitation message. A list of source layer-2 ID(s) may indicate relays that are configured in a data path.

Referring again to FIG. 5, a 5G ProSe UE-to-UE relay discovery solicitation message transmission process may be described. The discoverer UE may generate and transmit a 5G ProSe UE-to-UE relay discovery solicitation message in order to communicate with the discoveree UE by using one or more 5G ProSe UE-to-UE relays. The parameter values (including at least one of the following parameters) of the 5G ProSe UE-to-UE relay discovery parameter group in the 5G ProSe UE-to-UE relay discovery solicitation message may be configured as follows:
Type of Discovery Message: 5G ProSe UE-to-UE Relay Discovery Solicitation
User Info ID: User Info ID of discoverer
User Info ID: User Info ID of discoveree
RSC
Source Layer-2 ID: assigned by discoverer
Destination Layer-2 ID: default destination Layer-2 ID

Parameters of the multiple PC5 hops parameter group in the 5G ProSe UE-to-UE relay discovery solicitation message (including at least one of the following parameters) may be configured as follows.
User Info ID: User Info ID of Relay
Hop Limits: A value based on the above description of parameters
Hop Counts: 0
Degree of Mobility: Configured only by a relay (without excluding configuration by an end UE)
Status of Battery: Configured only by a relay (without excluding configuration by an end UE)
Status of Load: Configured only by a relay (without excluding configuration by an end UE)
Original Source Layer-2 ID: Configured only by a relay
Num. of Duplicated
List of Source Layer-2 ID(s)

The solicitation message transmitted by the discoverer UE may be received by one or more relays located around the discoverer UE. The destination layer-2 ID of the solicitation message is configured as a default, and thus all relays are able to receive the solicitation message. The relay may receive the solicitation message and identify the value of RSC in the message. If the relay is an RSC that provides a connectivity service, the relay may modify the received 5G ProSe UE-to-UE relay discovery solicitation message and retransmit the modified message. In this case, if the relay is one hop away from the discoverer, the relay may modify the message as follows.

Parameters of the 5G ProSe UE-to-UE relay discovery parameter group may be configured as follows. Of course, this is not limited to the following example.
Type of Discovery Message: 5G ProSe UE-to-UE Relay Discovery Solicitation
User Info ID: User Info ID of discoverer
User Info ID: User Info ID of discoveree
User Info ID: User Info ID of Relay
RSC
Source Layer-2 ID: assigned by Relay
Destination Lyaer-2 ID: default destination Layer-2 ID

Parameters of the multiple PC5 hops parameter group may be configured as follows. Of course, this is not limited to the following examples.
Hop Limits: value of Hop Limits received - 1
Hop Counts: value of Hop Counts received + 1
Degree of Mobility: Degree of Mobility of Relay
Status of Battery: Status of Battery of Relay
Status of Load: Status of Load of Relay
Original Source Layer-2 ID: Source Layer-2 ID of Discoverer
Num. of Duplicated: value (if the relay is a duplicated relay, the value - 1)
List of Source Layer-2 ID(s): ID (adding its own source layer-2 ID)

If the relay is two hops away from the discoverer, the message may be modified as follows.

Parameters of the 5G ProSe UE-to-UE relay discovery parameter group may be configured as follows. Of course, this is not limited to the following example.
Type of Discovery Message: 5G ProSe UE-to-UE Relay Discovery Solicitation
User Info ID: User Info ID of discoverer
User Info ID: User Info ID of discoveree
User Info ID: User Info ID of Relay
RSC
Source Layer-2 ID: assigned by Relay
Destination Lyaer-2 ID: default destination Layer-2 ID

Parameters of the multiple PC5 hops parameter group may be configured as follows. Of course, this is not limited to the following example.
Hop Limits: value of Hop Limits received - 1
Hop Counts: value of Hop Counts received + 1
Degree of Mobility: existing list of degree of mobility of relays, and degree of mobility of the relay itself
Status of Battery: existing list of status of battery of relays, and status of battery of the relay itself
Status of Load: existing list of status of load of relays, and status of load of the relay itself
Original Source Layer-2 ID: Source Layer-2 ID of discoverer (unchanged)
Num. of Duplicated: value (if the relay is a duplicated relay, the value - 1)
List of Source Layer-2 ID(s): ID (adding its own Source Layer-2 ID)

A relay having received a solicitation message including an original source layer-2 ID may determine whether the received solicitation message is a duplicated message, based on at least one of a discoverer user info ID, an RSC, or a value of original source layer-2 ID. If the message is determined to be duplicated, the relay may determine whether to additionally retransmit the solicitation message based on the value of Num. of Duplicated. If the value of Num. of Duplicated is "0," the relay may not perform an additional retransmission of the solicitation message. The relay may immediately retransmit the first-received solicitation message and discard a subsequently received duplicated message. Alternatively, the relay may select whether to retransmit (or whether to discard a subsequently received duplicated message) among duplicated messages received during a predetermined time period, by considering at least one of the Hop Counts, mobility of the relay, Status of Battery, and Status of Load. In addition, the relay may select whether to retransmit the solicitation message (or whether to discard a subsequently received duplicated message) by considering the received signal strength. For example, in FIG. 5, the relay may retransmit the first-received message according to the order of arrival time and may discard a duplicated message received later. If the value of Num. of Duplicated is "1" or greater, the relay may reduce the value of Num. of Duplicated by 1 and reconfigure the reduced value in the duplicated message (for example, if the value of Num. of Duplicated is 2, the value may be reconfigured as 1), and may additionally retransmit the duplicated message. As described above, the relay may configure multiple data paths through additional retransmission. At the last relay, the duplicated message may have a Hop Limits value of 0, and thus no further retransmission may be performed. The discoveree 5G ProSe End UE may receive the solicitation message through multiple transmission paths. The discoveree 5G ProSe End UE having received the solicitation message through multiple transmission paths may identify the RSC value and the User Info ID (e.g., Discoveree) value included in the solicitation message. The discoveree 5G ProSe End UE may determine a communication path with the discoverer UE based on the identified RSC value and the User Info ID (Discoveree) value in the solicitation message. For example, the discoveree 5G ProSe End UE may determine the communication path with the discoverer UE by considering at least one of Hop Counts, Degree of Mobility, Status of Battery, or Status of Load. In addition, the discoveree 5G ProSe End UE may further consider an order of message arrival or a radio state of a last-hop relay. The example of FIG. 5 illustrates an operation in which the discoveree 5G ProSe End UE selects a path having a smallest hop count.

A path for data communication between 5G ProSe End UEs may be discovered through multiple other relays. UEs (e.g., 5G ProSe End UEs) may select one of the discovered paths to transmit and/or receive data. However, since a currently used data path may be disconnected for various reasons, a UE (e.g., a 5G ProSe End UE) may store multiple discovered data transmission paths in a table format as shown below. However, the configuration of Table 1 and the elements included in Table 1 are merely examples, and are not limited thereto.

**[Table 1]**

| Path Number | List of Relays | Common Relays | Priority | Redundant Candidate Paths | Score |
|---|---|---|---|---|---|
| 1 | ID1, ID3, ID5, ID7 | ID1, ID5, ID7 | 1 | P3 , P2 | 70 |
| 2 | ID1, ID2, ID6, ID8 | ID1, ID2 | 3 | P1, P4 | 50 |
| 3 | ID2, ID5, ID9 | ID2, ID5 | 2 | ··· . | ··· |
| 4 | ID1, ID10, ID11 | ID1 | 4 | .... | ... |
| 5 | ID4, ID7, ID12 | ID7, ID12 | 5 | ··· | ··· |

Path number may be an index number of the discovered data transmission path.

List of relays may be a list of Layer-2 IDs of relays that transmit data in a data path.

Common relays may be a Layer-2 ID of a common relay included in another path.

Priority may be a value calculated by considering at least one of the number of hops in a path, Degree of Mobility, Status of Battery, or Status of Load, and may be recalculated by a score value.

In order to increase data transmission reliability, the UE may transmit identical data through two or more data transmission paths. For example, the UE may select, from among multiple data transmission paths, a path for data transmission by considering at least one of priority and common relays between the respective data transmission paths. For example, the UE may select a path having the highest priority (for example, path number 1) or a path having the fewest common relays (for example, path number 4) among the multiple data transmission paths. As another example, the UE may select path number 3 as a data transmission path by considering both priority and common relays among multiple data transmission paths. Of course, this is not limited to the above example, and a path having a lower priority may also be selected as a data transmission path.

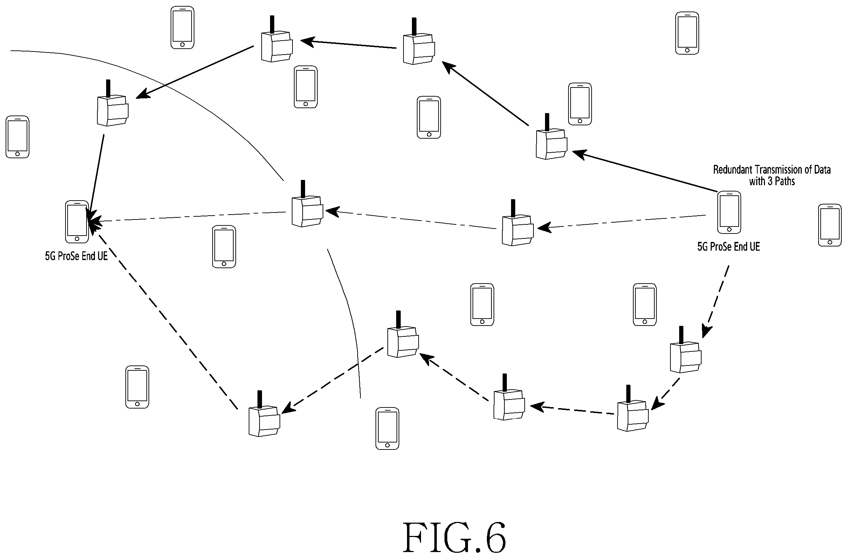

FIG. 6 illustrates a scenario in which the same data is redundantly transmitted through multiple data transmission paths according to an embodiment of the disclosure. In this case, redundant transmission may refer to a scheme in which identical data is transmitted simultaneously through multiple data transmission paths. However, the simultaneous transmission is only an example, and is not necessarily limited to simultaneous transmission.

Referring to FIG. 6, whether to redundantly transmit data by using multiple data transmission paths may be determined according to a service (for example, RSC) requirement. For example, in FIG. 6, the UE (e.g., 5G ProSe End UE) is illustrated as transmitting the same data three times by using the three discovered data transmission paths. If at least one of the transmission paths is not disconnected, data may be transmitted to a counterpart UE.

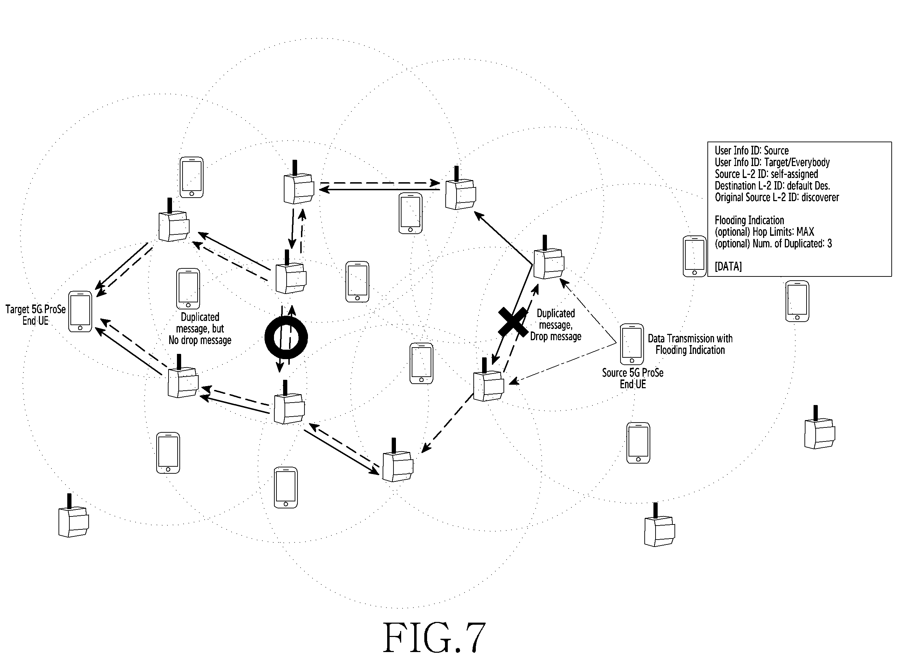

FIG. 7 illustrates data transmission according to a flooding scheme in which data is directly transmitted without performing data path discovery according to an embodiment of the disclosure.

Referring to FIG. 7, a UE (e.g., a source 5G ProSe End UE) may transmit data in a flooding manner according to the requirement of a service (e.g., RSC). For flooding transmission, a data transmission message may include a flooding indication and data to be transmitted. The UE may configure a target user info ID as an ID of a UE to which the data is to be transmitted, or as an ID corresponding to all UEs, and may transmit the data accordingly. The UE may additionally include Hop Limits and Num. of Duplicated fields to reduce congestion within a network. In FIG. 7, there may be two methods for processing a duplicated message. When a duplicated message has been transmitted through different paths, the duplicated message may be retransmitted. However, a duplicated message directly exchanged between two relays may not be retransmitted.

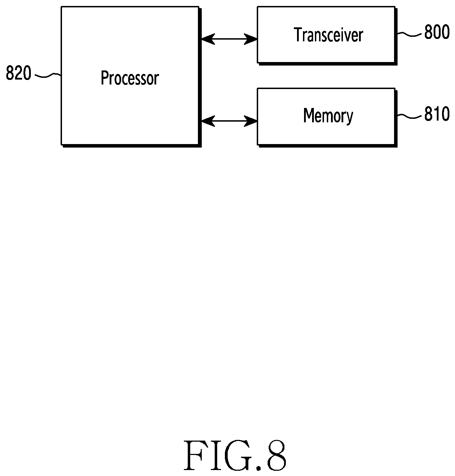

FIG. 8 illustrates a structure of a UE according to an embodiment of the disclosure.

The UE according to an embodiment of the disclosure may include a processor 820 which controls the overall operation of the UE, a transceiver 800 which includes a transmitter and a receiver, and a memory 810. Of course, the example given above is not limiting, and the UE may include a smaller or larger number of components than the components illustrated in FIG. 8.

According to an embodiment of the disclosure, the transceiver 800 may transmit/receive signals with network entities or other UEs. The signals transmitted/received with network entities may include control information and data. In addition, the transceiver 800 may receive signals through a radio channel, output the same to the processor 820, and transmit signals output from the processor 820 through the radio channel.

According to an embodiment of the disclosure, the processor 820 may control the UE to perform operations according to any one of the above-described embodiments. The processor 820, the memory 810, and the transceiver 800 are not necessarily implemented as separate modules, but may be implemented as a single component unit such as a single chip. Also, the processor 820 and the transceiver 800 may be electrically connected to each other. In addition, the processor 820 may be an application processor (AP), a communication processor (CP), a circuit, an application-specific circuit, or at least one processor.

According to an embodiment of the disclosure, the memory 810 may store data such as basic programs for operations of the UE, application programs, and configuration information. In particular, the memory 810 provides the stored data at the request of the processor 820. The memory 810 may include storage media such as a ROM, a RAM, a hard disk, a CD-ROM, and a DVD, or a combination of storage media. In addition, the memory 810 may include multiple memories. Furthermore, the processor 820 may perform the above-described embodiments of the disclosure, based on the programs for performing the embodiments, stored in the memory 810.

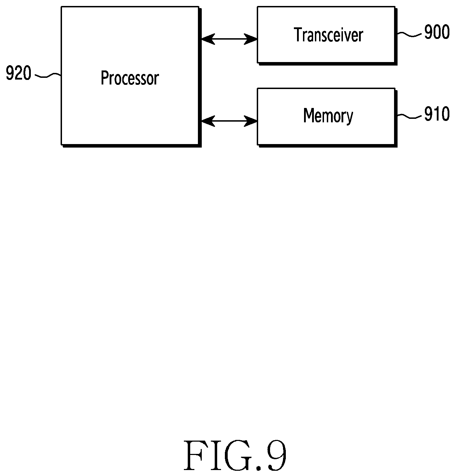

FIG. 9 illustrates a structure of a base station or network entity according to an embodiment of the disclosure.

The network entity according to an embodiment of the disclosure may include a processor 920 which controls the overall operation of the network entity, a transceiver 900 which includes a transmitter and a receiver, and memory 910. Of course, the example given above is not limiting, and the network entity may include a smaller or larger number of components than the components illustrated in FIG. 9.

According to an embodiment of the disclosure, the transceiver 910 may transmit/receive signals with at least one of other base stations (or other network entities) or UEs. The signals transmitted/received with at least one of other base stations (or other network entities) or UEs may include control information and data.

According to an embodiment of the disclosure, the processor 920 may control the network entity to perform operations according to any one of the above-described embodiments. Of course, the processor 920, the memory 910, and the transceiver 900 are not necessarily implemented as separate modules, but may be implemented as a single component unit such as a single chip. Also, the processor 920 and the transceiver 900 may be electrically connected to each other. In addition, the processor 920 may be an application processor (AP), a communication processor (CP), a circuit, an application-specific circuit, or at least one processor.

According to an embodiment of the disclosure, the memory 910 may store basic programs, application programs, and data, such as configuration information, for the operation of the network entity. In particular, the memory 910 provides the stored data at the request of the processor 920. The memory 910 may include storage media such as a ROM, a RAM, a hard disk, a CD-ROM, and a DVD, or a combination of storage media. In addition, the memory 910 may include multiple memories. Furthermore, the processor 920 may perform the above-described embodiments of the disclosure, based on the programs for performing the embodiments, stored in the memory 910.

It should be noted that the above-described configuration diagrams, illustrative diagrams of control/data signal transmission methods, illustrative diagrams of operation procedures, and structural diagrams are not intended to limit the scope of the disclosure. That is, all the constituent elements, entities, or operation steps described in the embodiments of the disclosure should not be construed as being essential elements for the implementation of the disclosure, and even when including only some of the elements, the disclosure may be implemented without impairing the true of the disclosure. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the 5G or NR system, other variants based on the technical idea of the embodiments may also be implemented in other communication systems such as LTE, LTE-A, or LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a first relay terminal in a wireless communication system, the method comprising:
receiving, from a first terminal, a first message for discovery of a second terminal; and
transmitting, based on the first message, a second message to a second relay terminal,
wherein the first terminal, the second terminal, the first relay terminal, and the second relay terminal are terminals supporting proximity based services (ProSe), and
wherein the first message comprises first information for a relay service and second information for a multi-hop relay.

2. The method of claim 1, wherein the first information comprises at least one of a type of the first message, information on a service, information on the first terminal, information on the second terminal, identification information of the first relay terminal, or identification information of the second relay terminal.

3. The method of claim 1, wherein the second information comprises at least one of a limit value for the number of hops, a hop count, a duplication count of the first message, state information of at least one relay terminal including the first relay terminal, an identifier of the at least one relay terminal, or a list of relay terminals including the at least one relay terminal, and
wherein the at least one relay terminal is located on a transmission path of the first message.

4. The method of claim 3, wherein the state information of the at least one relay terminal comprises at least one of information on a degree of mobility, battery state information, or data state information.

5. The method of claim 2, wherein whether the first message is duplicated is determined based on information on the second terminal, information on the service, and identification information of the first relay terminal.

6. The method of claim 3, further comprising identifying transmission of the second message, based on the duplication count of the first message.

7. The method of claim 6, further comprising:
discarding at least one of duplicated first messages in case that the duplication count of the first message is 0; and
generating the second message in case that the duplication count of the first message is not 0.

8. The method of claim 1, wherein data reception paths for receiving data from the second terminal are determined based on the first information and the second information, and
wherein the data reception paths comprise candidate data reception paths.

9. A first relay terminal in a wireless communication system, comprising:
a transceiver; and
at least one controller connected to the transceiver,
wherein the at least one controller is configured to:
receive, from a first terminal, a first message for discovery of a second terminal; and
transmit, based on the first message, a second message to a second relay terminal,
wherein the first terminal, the second terminal, the first relay terminal, and the second relay terminal are terminals supporting proximity based services (ProSe), and
wherein the first message comprises first information for a relay service and second information for a multi-hop relay.

10. The first relay terminal of claim 9, wherein the first information comprises at least one of a type of the first message, information on a service, information on the first terminal, information on the second terminal, identification information of the first relay terminal, or identification information of the second relay terminal.

11. The first relay terminal of claim 9, wherein the second information comprises at least one of a limit value for the number of hops, a hop count, a duplication count of the first message, state information of at least one relay terminal including the first relay terminal, an identifier of the at least one relay terminal, or a list of relay terminals including the at least one relay terminal, and
wherein the at least one relay terminal is located on a transmission path of the first message.

12. The first relay terminal of claim 11, wherein the state information of the at least one relay terminal comprises at least one of information on a degree of mobility, battery state information, or data state information.

13. The first relay terminal of claim 10, wherein whether the first message is duplicated is determined based on information on the second terminal, information on the service, and identification information of the first relay terminal.

14. The first relay terminal of claim 11, wherein the at least one controller is further configured to identify transmission of the second message, based on the duplication count of the first message.

15. The first relay terminal of claim 14, wherein the at least one controller is further configured to:
discard at least one of duplicated first messages in case that the duplication count of the first message is 0; and
generate the second message in case that the duplication count of the first message is not 0.
